Europäisches Patentamt

European Patent Office

Office européen des brevets

(11) Publication number: **0 085 102**
**B1**

(12) **EUROPEAN PATENT SPECIFICATION**

(45) Date of publication of patent specification: **03.12.86**

(51) Int. Cl.⁴: **B 65 G 43/08,** B 65 G 47/04, B 65 G 47/51

(21) Application number: **82902783.8**

(22) Date of filing: **05.08.82**

(86) International application number: **PCT/US82/01073**

(87) International publication number: **WO 83/00478 17.02.83 Gazette 83/05**

(54) **TRANSPORT SYSTEM.**

(30) Priority: **10.08.81 US 291497**

(43) Date of publication of application: **10.08.83 Bulletin 83/32**

(45) Publication of the grant of the patent: **03.12.86 Bulletin 86/49**

(84) Designated Contracting States: **DE FR GB**

(56) References cited:
FR-A-2 306 788
GB-A-1 312 094
US-A-3 198 308
US-A-3 276 563
US-A-3 522 942
US-A-3 543 916
US-A-3 921 786
US-A-4 154 334
US-A-4 227 607
US-A-4 277 217

(73) Proprietor: **WIEBE MANUFACTURING INC.**
**1131 San Felipe Road P.O. Box 639**
**Hollister, CA 95023 (US)**

(72) Inventor: **WELDER, William C.**
**865 Chesapeake**
**Gilroy, CA 95020 (US)**
Inventor: **MAYNES, Stanley L.**
**301 Arroyo Seco Drive**
**Hollister, CA 95023 (US)**

(74) Representative: **Bernhardt, Klaus et al**
**Radeckestrasse 43**
**D-8000 München 60 (DE)**

Courier Press, Leamington Spa, England.

## Description

The invention relates to a transport system wherein a moving belt is provided for carrying thereon an article from at least one location there along to at least a second location there along, including at least one device for removing an article from the belt at said second position, according to the preamble of claim 1.

A transport system of this type is known from GB—PS—13 12 094, this system comprising a sweep arm structure including in plan view first and second arms joined together substantially orthogonally at a vertex, means holding said arm structure with its vertex along side but off of said belt for permitting rotation of said arm structure about said point, and means providing rotating power to said arm structure for moving it between a rest position and an article capturing position, said rest position holding said arm structure with said first arm substantially parallel to said belt and the second arm extending away therefrom, said article capturing position being with said first arm extending across said belt to capture an article in an acute angle made by said first arm and the length of said belt, whereby an article being carried by the belt is stopped by said first arm and slid by action of the belt there along toward the second arm, the article then being removable from the belt by rotating said arm structure from its article capturing position to its rest position.

From US—A—32 76 563 there is known a transport system of the above indicated type. which comprises a sweep arm structure including a diverting arm and a shock absorbing abutment at one end; means holding this arm structure with the shock absorber abutment along side but off the belt for permitting rotation of the arm structure about a point of the belt, and means providing rotating power to said arm structure for moving it between a rest position and an article capturing position, said rest position holding said arm structure with the diverting arm substantially parallel to the belt and the abutment extending away therefrom, said article capturing position being with said first arm extending across the belt to capture an article in an acute angle made by said diverting arm and the length of the belt, whereby an article being carried by the belt is slid by action of the belt there along toward the abutment, the article then being tilted off from the belt, and the diverting arm structure being rotated from the article capturing position to its rest position.

In both prior art transport systems the acute angle made by the first or diverting arm and the length or the conveyor belt is typically less than 30 degrees. Such an orientation causes the arm structure to re-orient the article being removed with respect to its direction of travel. In that context it is to be noted that in both prior art transport systems referred to above a further travel of the removed article is not contemplated, in the latter case such further movement is even made impossible by providing the second arm with an extra leg which holds the whole arm closed until the article is removed by hand.

While such re-orientation of the article being removed with respect to its direction of travel may be acceptable in many cases, such a re-orientation cannot be tolerated in critical applications, a notable example therefore being assembly lines in which one or more work stations are equipped with robotic assembly stations. Where such a critical positioning of the article is required, the prior art failed to provide a solution, so that it was indispensable that the article had to be manually carried further or positioned in accurate alignment for use in conjunction with a robotic assembly.

Accordingly, it is the object of the present invention to modify the prior art transporting system such as to ensure that the orientation of the article with respect to its direction of travel is the same before and after removal from the moving belt.

In the transporting system of the type disclosed in GB—PS—13 12 094 referred to above this object is achieved by the seemingly simple expedient to make the acute angle between the first arm and the length of the belt in excess of 45 degrees, and to make the second arm substantially straight. As an additional benefit in assembly lines it should be mentioned that the first arm in the case of the modified transporting system need not be as long as in the devices of the prior art, and consequently work stations along an assembly line can be positioned closer together than previously contemplated.

In the simplest form of the transport system of the invention a work station exists at the second location, said sweep arm structure delivering from the belt an article to be worked upon.

In a more elaborate embodiment the transport system of the invention additionally comprises a second belt positioned substantially perpendicular to said first belt at said second location, whereby said sweep arm structure is able to remove an article from one belt onto the second belt.

In a preferred embodiment the acute angle made between the direction of movement of the belt and said first arm of the sweep arm structure when in its article capturing position is substantially within the range of 55 to 65 degrees.

There may be provided in the system of the invention an electrical switch carried by said one arm and positioned in a manner to be actuated upon an article carried by said belt striking said first arm when the sweep arm structure is in its article capturing position, and if such a switch is provided, additional means may be provided responsive to actuation of this electrical switch for causing said arm to operate to rotate from its article capturing position to its rest position.

Instead, there may be provided means responsive to actuation of this electrical switch when the sweep arm structure is in its rest position for preventing rotation of said sweep arm structure.

A device for moving an article transversely onto the moving belt of a transport system according to the invention at a particular location along its length comprises preferably sending means characterized by permitting the article to be easily slid towards said moving belt and substantially orthogonal thereto for positioning the article to be advanced onto said moving belt, a pusher adapted to advance an article from said sending means onto said moving belt, said pusher extending upward from a resting surface of said sending means and being pivotively mounted in a manner to be rotatable in a direction toward said moving belt as an article is slid thereover but normally biased to extend upward, thereby permitting an article to be slid onto the sending means and positioned for advancement onto the moving belt by said pusher, and means for moving said pusher in a direction toward and away from said moving belt, whereby an article can be pushed from the sending means onto said moving belt by the pusher when desired and the pusher returned to its normal rest position. Such sending means may provide a plurality of rollers oriented with their axes of rotation substantially parallel to the direction of travel of said moving belt, whereby the article can easily be slid into position on the sending means; said rollers may be arranged to provide a clear path substantially orthogonal to said moving belt direction of travel and intermediate of the ends of said rollers adjacent said path, said pusher being mounted to travel in said path between the rollers, while said pusher moving means may include an air driven rodless cylinder.

Preferably such a system comprises additionally a sensor that detects the presence of an article on said sending means, said sensor being connected to control said pusher moving means in a manner to enable operation of the pusher only when an article is in position on the sending means.

For convenient operation a spring may be provided to bias the pusher blade to extend upward.

The invention will be described in detail in conjunction with a preferred embodiment shown in the accompanying drawings, wherein

Brief description of the drawings
Figure 1 shows one application of the various aspects of the present invention in an embodiment of a production line having a plurality of work stations positioned along the length of a moving belt;
Figure 2 shows a typical sweep arm structure of the system of Figure 1, taken at section 2—2 thereof;
Figure 3 is a plan view of the sweep arm structure of Figure 2;
Figure 4 shows an ejection mechanism for the work stations of the system of Figure 1, taken at section 4—4 thereof;
Figure 5 is a plan view of the ejection mechanism of Figure 4;

Figure 6 illustrates the pusher element of the ejecting mechanism of Figures 4 and 5;
Figure 7 shows in block diagram form the electronic control for the system of Figure 1; and
Figure 8 illustrates a variation of the system of Figure 1 wherein a sweeparm structure is utilized to transfer articles from one belt to another.

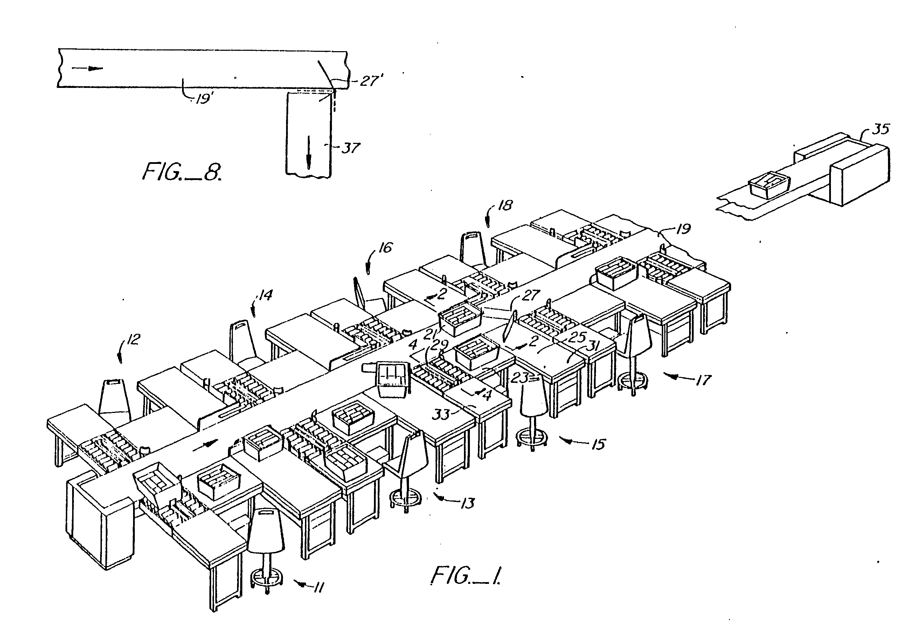

Figure 1 illustrates a specific application of the various aspects of the present invention in order that they may be understood. That application is in a production line having a plurality of individual work stations 11 through 18 that are positioned on opposite sides of and along the length of a continuously moving belt 19. Articles to be moved along the belt are illustrated to be a tote or basket 21 that contains small parts being manufactured. An example of such parts is small semiconductor components or printed circuit boards wherein each pair of opposing work stations, or a group of such pairs adjacent one another, perform one manufacturing step, the next group of work stations performs the next manufacturing step, and so forth. The belt 19 thus has the purpose of moving the article from one station to another for performing different assembly or other operations on the articles.

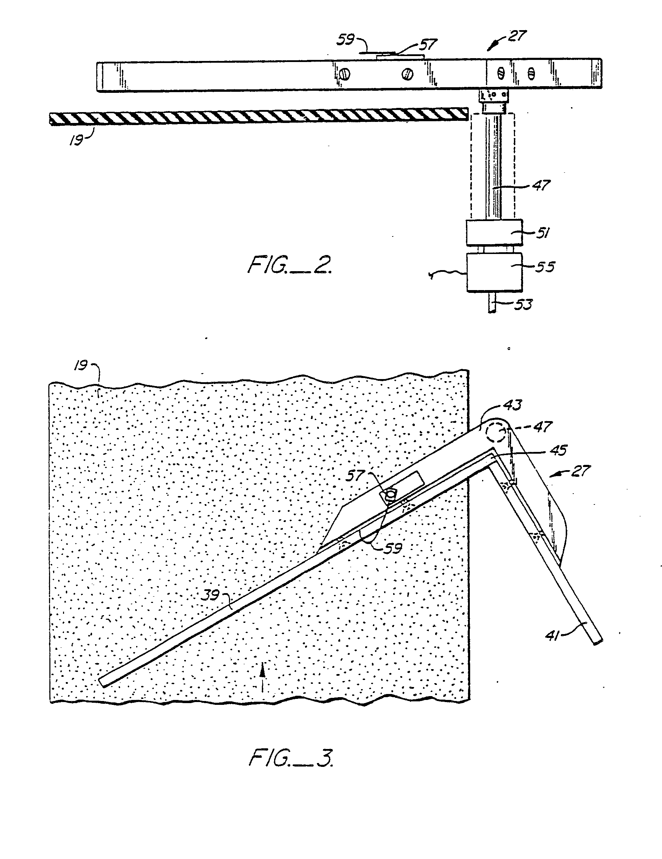

Each of the work stations illustrated in Figure 1 is essentially the same. Taking work station 15 as an example, a worker utilizes a table surface portion 23 for performing the operations on the articles. Adjacent to that surface is another surface 25 in which articles to next be processed at that location are temporarily stored. It will be noted that work station 11 and 17 show totes being positioned at their respective work input temporary storage locations. A sweeparm assembly 27 is provided for diverting an article from the belt into this storage location 25. Details of the sweeparm assembly 27 are described hereinafter with respect to Figures 2 and 3.

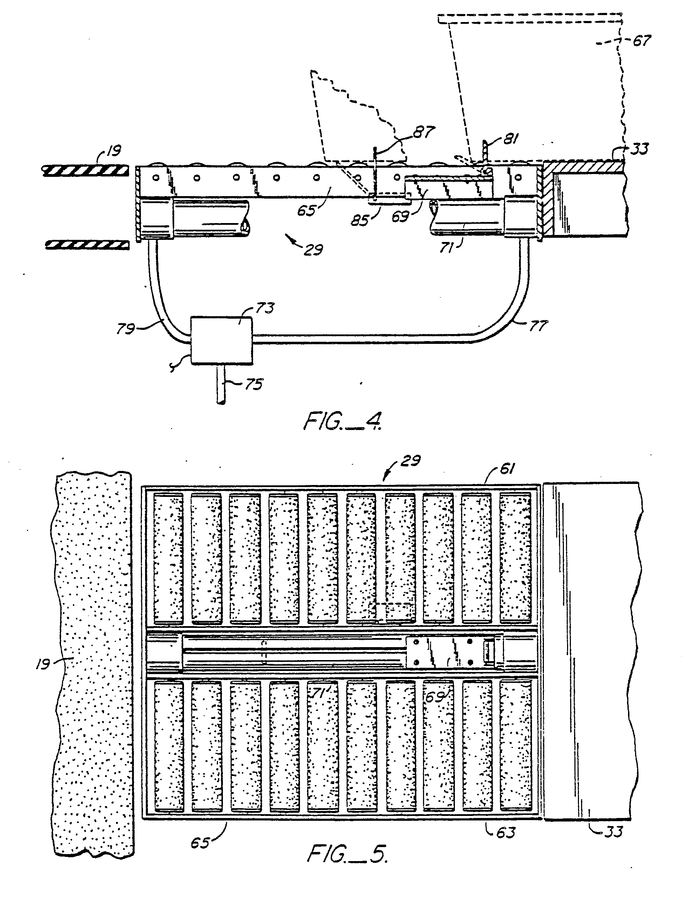

On an opposite side of the working surface 23 at the station 15 is an ejection mechanism 29 provided as a surface for storage of an article which has been processed by that work station and which is awaiting ejection back onto the belt 19 at an appropriate time. This time will be when a work station downstream is available to receive the article at its temporary input storage location. The ejecting mechanism of work station 11 is shown to be pushing a tote onto the belt 19. Details of the ejecting mechanism 29 are discussed hereinafter with respect to Figures 4, 5 and 6.

Additional work surface areas are provided at each work station. For example, a surface area 31, sharing a table top with the input storage location 25, is available for the worker of that station to move a tote or other article from the region 25 to the region 31. That station would then be able to accept another article for storage in the surface 25 by diversion from the belt 19 with the arm structure 27. Similarly, a table surface 33 is provided adjacent the ejecting mechanism 29 for storage of another article such as one that has been completed and is awaiting ejection back onto the belt 19. Furthermore, the surface 33 allows the operator to easily push a completed article onto the mechanism 29, as described hereinafter with respect to Figures 4, 5 and 6.

Since the system of Figure 1 permits the movement of articles between work stations without having to return them to the beginning or some other common location along the length of the belt 19, the speed of the belt 19 can be less than that of the predominant commercial systems without slowing down the transfer of articles. The ability to be transferring more than one article along the length of the belt at the same time also has this same advantage. The slower, uniform speed of the belt 19 results in more careful handling of the articles, an important feature when the articles are somewhat delicate such as when electronic components are being transferred.

At a downstream end 35 of the belt 19, the totes or other articles are removed. Either they are completely assembled or are removed to a further assembly operation. An option particularly useful for incorporating adjacent the end 35 of the belt 19 is an orthogonal belt for selectively removing articles from the belt 19. This modification is shown in Figure 8 wherein a belt 37 is arranged substantially perpendicular with the belt 19'. A sweeparm structure 27', of the type to be described to Figures 2 and 3 hereinafter, is provided for selectively removing articles from the belt 19 and onto the belt 37. It may be desired to selectively remove defective articles, for example, or to transport some or all of the articles by way of the further belt 37 to additional work stations.

Referring to Figures 2 and 3, the structure and operation of the sweeparm 27 is now described. Two arms 39 and 41 are held by a bracket 43 to intersect each other at substantially a right angle at a vertex 45. The arm assembly is supported by a vertical shaft 47 that is attached to the bracket 43 adjacent the vertex 45.

The arm assembly of Figures 2 and 3 is shown to be in one of its two stable positions. The position shown is that for intercepting and removing an article from the belt 19, such as the tote 21 (Figure 1). It has been found preferable for one specific set of parameters to cause this article capturing position of the arm assembly 27 to rotate the assembly so that the arm 39 forms an angle around 60 degrees with the direction of travel of the belt 19. In any event, something less than 90 degrees, but greater than 45 degrees, is a workable range. An angle of from 55 to 65 degrees is preferred for many applications. This acute angle faces the direction from which the article approaches the arm 39 on the belt 19.

The second stable operable position of the sweeparm structure 27 is with the arm 39 parallel to the direction of travel of the belt 19 but removed from its edge. This is shown with the arm structure in a rest position at any of the work stations 12, 14, 16 and 18 (Figure 1). In this rest position, the arm assembly does not interfere with passing articles. The arm assembly is rotated between these two positions by some convenient mechanism, such as a rotary air cylinder 51 which applies compressed air thereto from a compressed air source 53 through a solonoid operated valve 55 that determines the direction of rotation of the shaft 47.

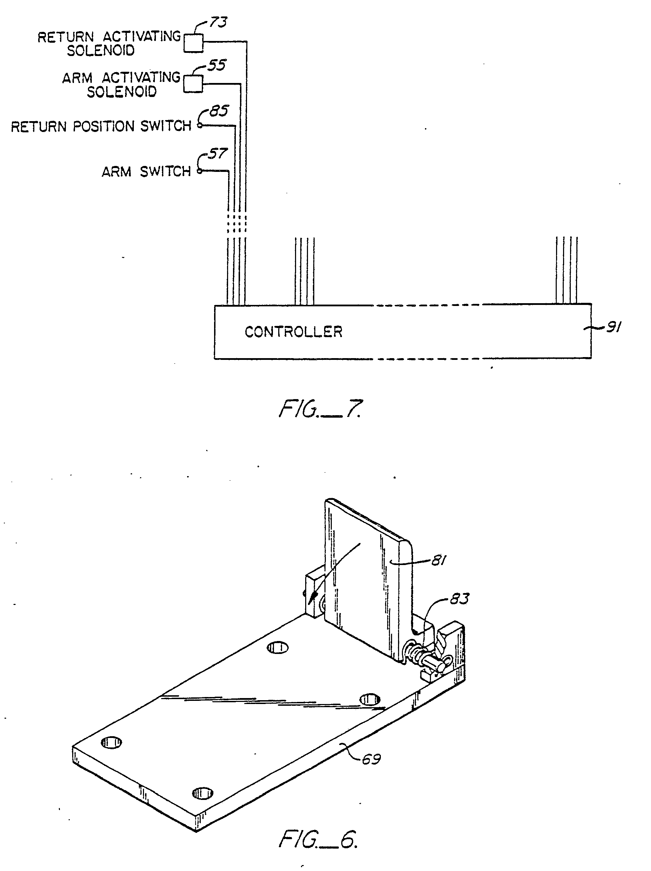

This particular article removing structure has been found to have a significant advantage in being very gentle to the articles it is removing. It also takes up little linear space along the belt so that the work stations can be positioned close together. The arms 39 and 41 are preferably made of a slightly resilient material, such as nylon, and each extend in only one direction from the vertex 45. An electrical switch 57 is operated upon pressing an activator 59 that extends inward of the arm 39. As an article such as the tote 21 (Figure 1) contacts the arm 39, the continued motion of the belt 19 causes it to slide along the arm 39 toward the vertex 45 because of its angular relationship. As the article does this, the switch activator 59 is pushed in the electrical state of the switch 57 is changed to give an indication that an article is in contact with the arm 39. This indication is utilized to operate the arm, as explained hereinafter with respect to Figure 7.

Referring to Figures 4, 5 and 6, the mechanism 29 for ejecting an article back on to the belt 19 is described in detail. Two rows 61 and 63 of rollers are fixed to a frame 65 in a manner to rotate about axes which are substantially parallel with the direction of travel of the belt 19. This results in a tote 67 or other article to be ejected from the work station back on the belt 19 of freely moving over the rollers in a direction substantially perpendicular to the belt 19. The rollers form a top surface, upon which the tote 67 sits, which is substantially in the same plane as the adjacent table top 33 and adjacent top surface of the moving belt 19, although it may be preferable to provide this surface slightly higher than that of the belt 19 onto which the tote is to be pushed.

The two rows of rollers 61 and 63 are separated by a gap in which a pusher assembly 69 is provided for moving back and forth toward and away from the belt 19. This movement is preferably provided by a rodless air cylinder 71 to which the pusher assembly 69 is attached for movement. The pusher assembly 69 is caused to move in one direction or the other, depending upon which end of the cylinder 71 compressed air is applied. A solenoid operated air valve 73 directs compressed air from a source conduit 75 to either the far end of the cylinder 71 through a hose 77 or the end closest to the belt 19 through a hose 79.

The pusher assembly 69, best shown by Figure 6, includes a pusher blade 81 that is pivotally attached to the main pusher assembly member 69. A spring 83 (or some other convenient standard mechanism such as counter weighting of the blade 81) is provided to bias the blade in a normal upright position. The blade 81 will depress downward, however, as a tote 67 is pushed from the table surface 33 onto the rollers, as shown best in Figure 4. Once the tote 67 clears the blade 81, the blade snaps back into position so that operation of the air cylinder 71 will cause the assembly 69 to move toward the belt 19 and thus push the tote 67 onto the belt.

In order to detect when an article such as the tote 67 is positioned on the rollers, an electrical switch 85 is provided affixed to the frame 65. An actuator 87 causes the switch to be operated when a tote 67 or some other article has been placed on the rollers in position for subsequent ejection onto the belt 19. The position of the switch actuator 87 when a tote 67 is in such a position is shown in dotted outline in Figure 4. The state of the switch 85 provides necessary information for controlling the operation hereinafter with respect to Figure 7.

Referring to Figure 7, several alternatives for controlling the transport system described with respect to Figures 1 through 6 will be explained. The two article sensing switches and two solenoids for each of the work stations are connected to a controller 91. Those elements for the one work station that has been described as an example are schematically represented in Figure 7; corresponding elements for every other work station also exist and are connected to the controller 91.

One form of the controller 91 is to provide indicators as to the state of the switches at each work station and manually actuate its switches on a control panel by operation of a central control person who observes the state of the switches and perhaps has visual observation of the entire assembly procedure. Thus, when the operator receives an indication that an article was placed in the ejection location at one work station, he then looks for an available position at the temporary input surface of a work station performing the next operation on the article. The existence of a free input location at such a work station would be given by the absence of the arm switch (57 for the work station described) previously being depressed. For example, if a tote is in that input position, as it is in work stations 11 and 17 of Figure 1, the switch is depressed and the operator knows that the sweep arm structure at those locations cannot be rotated at that time until the indicator on the control panel shows that the tote has been removed from that input position by the operator at that station. The switch 57 can also be used by a simple circuit in the controller for each work station to initiate rotation of the sweeparm structure from its article capturing position (as shown in Figures 2 and 3) to its rest position when an article is in position against the arm 39 and thus actuates the switch 57.

Another alternative for the control function is to provide indicators and switches at each of the work stations. The workers can then communicate with each other, by an intercom system or otherwise to prearrange transfer of totes. No central operator would thus be required.

Another alternative for the controller 91 is to include a computer control that receives the switch input and sends commands to the solenoids in response to the existence of predetermined conditions. Such a computer is programmed to know what functions are being performed at the various work stations and then looks for a tote on the ejecting rollers on one work station (activating the switch 85) and a free input location at (no activation of switch 57) a work station downstream that is to perform the next operation on the article. When this condition is noted and other conditions are right, the controller will automatically operate the solenoid of the first station to eject the article onto the belt and operate the solenoid for the sweeparm structure at the second downstream work station at an appropriate time to place it in the path of the article that is to be directed to that second work station. These are the same functions that can be done manually by a human operator who observes the state of the various switches and in response to those states actuates the various solenoids at the work station to accomplish the same results.

The present invention has been described with respect to a particular embodiment thereof and it will be understood that the invention is entitled to protection within the full scope of the appended claims. Many variations of this particular embodiment are possible but which still can utilize one or more aspects of the present invention. For example, the temporary storage surface 25 of the typical work station 15, and the additional storage surface 31, can be replaced by a set of rollers that descend in a direction away from the belt 19 so that any articles removed from the belt by the sweep arm structure are carried by gravity away from the belt. If this is done, an additional sensing switch is provided in connection with the rollers to detect when the input storage space provided by the rollers is filled. The switch 57 on the arm structure 27 can no longer serve that function since the articles will roll away from the arm structure 27 as soon as they are removed from the belt 19.

Another alternative is to provide a means in connection with a main belt for removing an article therefrom for processing at additional work stations that are removed from the belt 19. This removal can be accomplished by use of an orthogonal belt, as described with respect to Figure 8. A return belt would then also have to be added which will return the articles to a roller sending location, such as location 29 of the work station 15, for eventual ejection back onto the main belt 19 when conditions are appropriate.

**Claims**

1. Transport system wherein a moving belt (19, 19') is provided for carrying thereon an article (21) from at least one location (11...18) there along to at least a second location (13...18), 35, 37) there along, including at least one device for removing an article (21) from the belt (19, 19') at said second position (13...18, 35, 37), comprising:
a sweep arm structure (27, 27') including in plan view first and second arms (39, 41) joined together substantially orthogonally at a vertex (45),

means (43, 47) holding said arm structure (27, 27') with its vertex (45) along side but off of said belt (19, 19') for permitting rotation of said arm structure (27, 27') about said point (47), and

means (51) providing rotating power to said arm structure (27, 27') for moving it between a rest position and an article capturing position, said rest position holding said arm structure (27, 27') with said first arm (39) substantially parallel to said belt (19, 19') and the second arm (41) extending away therefrom, said article capturing position being with said first arm (39) extending across said belt (19) to capture an article in an acute angle made by said first arm (39) and the length of said belt (19, 19'), whereby an article (21) being carried by the belt (19, 19') is stopped by said first arm (39) and slid by action of the belt (19, 19') there along toward the second arm (41), the article (21) then being removable from the belt (19, 19') by rotating said arm structure (27, 27') from its article capturing position to its rest position characterized in that

said acute angle between said first arm (39) and the length of the belt (19, 19') is in excess of 45 degrees, and that said second arm (41) is substantially straight.

2. System according to Claim 1 wherein a work station exists at said second location (13...18), said sweep arm structure (27) delivering from the belt (19) an article (21) to be worked upon.

3. System according to Claim 1 which additionally comprises a second belt (37) positioned substantially perpendicular to said first belt (19') at said second location (37), whereby said sweep arm structure (27') is able to remove an article (21) from one belt (19) onto the second belt (19').

4. System according to Claim 1, 2 or 3, wherein said acute angle made between the direction of movement of the belt (19, 19') and said first arm (39) of the sweep arm structure (27, 27') when in its article capturing position is substantially within the range of 55 to 65 degrees.

5. System according to any of Claims 1 to 4 which additionally comprises an electrical switch (57) carried by said one arm (39) and positioned in a manner to be actuated upon an article (21) carried by said belt (19, 19') striking said first arm (39) when the sweep arm structure (27, 27') is in its article capturing position.

6. System according to Claim 5 which additionally comprises means (91) responsive to actuation of said electrical switch (57) for causing said arm to operate to rotate from its article capturing position to its rest position.

7. System according to Claim 5 which additionally comprises means responsive to actuation of said electrical switch (57) when the sweep arm structure (27, 27') is in its rest position for preventing rotation of said sweep arm structure (27, 27').

8. System according to any of the preceding claims, wherein a device for moving an article transversely onto said moving belt (19, 19') at a particular location along its length comprises

sending means (29) characterized by permitting the article (21) to be easily slid towards said moving belt (19, 19') and substantially othogonal thereto for positioning the article (67) to be advanced onto said moving belt (19, 19'),

a pusher (69) adapted to advance an article (67) from said sending means (29) onto said moving belt (19, 19'), said pusher (69) extending upward from a resting surface (61, 63) of said sending means (29) and being pivotively mounted in a manner to be rotatable in a direction toward said moving belt (19, 19') as an article (67) is slid thereover but normally biased to extend upward, thereby permitting an article (67) to be slid onto the sending means and positioned for advancement onto the moving belt (19, 19') by said pusher (69), and

means (71) for moving said pusher (69) in a direction toward and away from said moving belt (19, 19'), whereby an article (67) can be pushed from the sending means (29) onto said moving belt (19, 19') by the pusher (69) when desired and the pusher (69) returned to its normal rest position.

9. System according to Claim 8, wherein said sending means (29) includes a plurality of rollers (61, 63) oriented with their axes of rotation substantially parallel to the direction of travel of said moving belt, whereby the article (67) can easily be slid into position on the sending means (29).

10. System according to Claim 9, wherein said rollers (61, 63) are arranged to provide a clear path substantially othogonal to said moving belt (19, 19') direction of travel and intermediate of the ends of said rollers (61, 63) adjacent said path, said pusher (69) being mounted to travel in said path between the rollers (61, 63).

11. System according to Claim 10, wherein said pusher moving means (71) includes an air driven rodless cylinder.

12. System according to Claim 8, 9, or 10, which additionally comprises a sensor (87) that detects the presence of an article (67) on said sending means (29), said sensor (87) being connected to control said pusher moving means (71) in a manner to enable operation of the pusher (69) only when an article (67) is in position on the sending means (29).

13. System according to any of claims 8 to 12, wherein a spring (83) is provided to bias the pusher (69) blade to extend upward.

**Patentansprüche**

1. Fördersystem, bei dem ein Laufband (19, 19') vorgesehen ist, um darauf einen Gegenstand (21) von wenigstens einer entlang desselben angeordneten Stelle (11...18) zu wenigstens einer zweiten Stelle (13...18, 35, 37) entlang desselben zu tragen, mit wenigstens einer Einrichtung, mit der ein Gegenstand (21) an der zweiten Stelle (13...18, 35, 37) vom Band (19, 19') zu entfernen ist, bestehend aus:

einer Räumarmkonstruktion (27, 27'), die, gesehen in der Aufsicht, zwei Arme (39, 41) aufweist, die an einem Scheitel (45) im wesentlichen orthogonal verbunden sind,

Mitteln (43, 47), die die Armkonstruktion (27, 27') mit ihrem Scheitel (45) entlang dem Band (19, 19'), jedoch von diesem entfernt halten, um eine Drehung der Armkonstruktion (27, 27') um den Punkt (47) zu erlauben, und

Mitteln (51) die Rotationsenergie für die Armkonstruktion (27, 27') zur Verfügung stellen, um diese zwischen einer Ruheposition und einer Gegenstand-Abfang-Position zu bewegen, wobei die Ruheposition die Armkonstruktion (27, 27') mit dem ersten Arm (39) im wesentlichen parallel zu dem Band (19, 19') und dem zweiten Arm (41) sich von diesem weg erstreckend hält, wobei in der Gegenstand-Abfang-Position der erste Arm (39) sich über das Band (19) erstreckt, um einen Gegenstand in einem spitzen Winkel zwischen dem ersten Arm (39) und der Länge des Bandes (19, 19') abzufangen, so daß ein vom Band (19, 19') mitgeführter Gegenstand (21) von dem ersten Arm (39) angehalten und durch die Wirkung des Bandes (19, 19') längs desselben auf den zweiten Arm (41) zu geschoben wird, und der Gegenstand (21) dann dadurch vom Band (19, 19') entfernbar ist, daß die Armkonstruktion (27, 27') von ihrer Gegenstand-Abfang-Position in ihre Ruhe-Position verdreht wird,

dadurch gekennzeichnet, daß

der spitze Winkel zwischen dem ersten Arm (39) und der Länge des Bandes (19, 19') größer als 45 Grad ist und daß der zweite Arm (41) im wesentlichen gerade ist.

2. System nach Anspruch 1, bei dem eine Arbeitstation an der zweiten Stelle (13...18) vorhanden ist und die Räumarmkonstruktion (27) von der Bahn (19) einen zu bearbeitenden Gegenstand (21) liefert.

3. System nach Anspruch 1, das zusätzlich ein zweites Band (37) aufweist, das im wesentlichen senkrecht zum ersten Band (19') an der zweiten Stelle (37) positioniert ist, so daß die Räumarmkonstruktion (27') in der Lage ist, einen Gegenstand (21) von einem Band (19) weg auf das zweite Band (19') zu bewegen.

4. System nach Anspruch 1, 2 oder 3 bei dem der spitze Winkel zwischen der Bewegungsrichtung des Bandes (19, 19') und dem ersten Arm (39) der Räumarmstruktur (27, 27') in der Gegenstand-Abfang-Position im wesentlichen im Bereich von 55 bis 65 Grad liegt.

5. System nach einem der Ansprüche 1 bis 4 das zusätzlich einen elektrischen Schalter (57) aufweist, der von dem einen Arm (39) getragen ist und in der Weise positioniert ist, daß er von einem von dem Band (19, 19') getragenen und auf den ersten Arm (39) auftreffenden Gegenstand betätigt wird, wenn sich die Räumarmkonstruktion (27, 27') in ihrer Gegenstand-Abfang-Position befindet.

6. System nach Anspruch 5, das zusätzlich Mittel (91) aufweist, die auf die Betätigung des elektrischen Schalters (57) ansprechen und dafür sorgen, daß der Arm betrieben wird um von seiner Gegenstand-Abfang-Position in seine Ruhe-Position rotiert.

7. System nach Anspruch 5, das zusätzlich Mittel aufweist, die auf die Betätigung des elektrischen Schalters (57) ansprechen, wenn die Räumarmkonstruktion (27, 27') sich in ihrer Ruhe-Position befindet, um eine Rotation der Räumarmkonstruktion (27, 27') zu verhindern.

8. System nach einem der vorangegangenen Ansprüche, bei dem eine Einrichtung zum Bewegen eines Gegenstandes quer auf das laufende Band (19, 19') zu an einer speziellen Stelle entlang seiner Länge besteht aus

Sendemitteln (29), die dadurch gekennzeichnet sind, daß sie es erlauben, den Gegenstand (21) leicht zu dem Laufband (19, 19') und im wesentlichen orthogonal dazu zu verschieben, um den Gegenstand (67) auf das laufende Band (19, 19') vorzuschieben,

eine Stoßstange (69), die dazu geeignet ist, einen Gegenstand (67) von den Sendemitteln (29) auf das laufende Band (19, 19') vorzuschieben, wobei sich die Stoßstange (69) von einer Ruhefläche (61, 63) der Sendemittel (29) nach oben erstreckt und schwenkbar in der Weise montiert ist, daß sie in eine Richtung zum laufenden Band (19, 19') verdrehbar ist, wenn ein Gegenstand (67) darüber geschoben wird, jedoch normalerweise so vorgespannt ist, daß sie sich nach oben erstreckt, so daß ein Gegenstand (67) mit der Stoßstange (69) auf die Sendemittel geschoben und zum Vorschub auf das laufende Band (19, 19') positioniert wird, und

Mitteln (71), mit denen die Stoßstange (69) in eine Richtung auf das laufende Band (19, 19') zu und von diesem weg bewegt werden kann, so daß ein Gegenstand (67) von dem Sendemittel (29) auf Wunsch mit der Stoßstange (69) auf das laufende Band (19, 19') geschoben werden kann, und die Stoßstange (69) in ihre normale Ruhelage zurückgeführt werden kann.

9. System nach Anspruch 8, bei dem die Sendemittel (29) eine Anzahl Walzen (61, 63) aufweisen, die mit ihren Drehachsen im wesentlichen parallel zur Laufrichtung des laufenden Bandes orientiert sind, so daß der Gegenstand (67) liecht in die Position auf den Sendemitteln (29) geschoben werden kann.

10. System nach Anspruch 9, bei dem die Walzen (61, 63) so angeordnet sind, daß sie einen freien Weg im wesentlichen orthogonal zur Laufrichtung des laufenden Bandes (19, 19') und zwischen den Enden der Walzen (61, 63), die dem Weg benachbart sind, bilden, wobei die Stoßstange (69) so montiert ist, daß sie in diesem Weg zwischen den Walzen (61, 63) läuft.

11. System nach Anspruch 10, dadurch gekennzeichnet, daß die Bewegungseinrichtung (71) für die Stoßstange einen luftbetriebenen, stangenlosen Zylinder aufweist.

12. System nach Anspruch 8, 9 oder 10, das zusätzlich einen Sensor (87) umfaßt, der das Vorhandensein eines Gegenstandes (67) auf den Sendemitteln (29) detektiert, wobei der Sensor (87) so angeschlossen ist, daß er den Stoßstangenantrieb (71) in der Weise steuert, daß eine Betätigung der Stoßstange (69) nur möglich ist, wenn sich ein Gegenstand (67) in Position auf den Sendemitteln (29) befindet.

13. System nach einem der Ansprüche 8 bis 12 bei dem eine Feder (83) vorgesehen ist, um die Klinge der Stoßstange (69) in die Aufwärtsstellung zu drängen.

**Revendications**

1. Installation de transport dans laquelle une courroie mobile (19, 19') est destinée à transporter un article (21) d'au moins un emplacement (11...19) le long de la courroie à au moins un second emplacement (13...18, 35, 37) le long de la courroie, comprenant au moins un dispositif d'enlèvement d'un article (21) de la courroie (19, 19') à la seconde position (13...18, 35, 37), comprenant:
une structure (27, 27') de balayage à bras comprenant, en plan, un premier et un second bras (39, 41) raccordés pratiquement en direction perpendiculaire à un sommet (45),
un dispositif (43, 47) de maintien de la structure à bras (27, 27') avec son sommet (45) placé sur le côté de la courroie (19, 19') mais en dehors de celle-ci afin qu'il permette la rotation de la structure à bras (27, 27') autour de ce point (47), et
un dispositif (51) destiné à transmettre de l'énergie de rotation à la structure à bras (27, 27') afin qu'elle soit déplacée entre une position de repos et une position de saisie d'article, la position de repos maintenant la structure à bras (27, 27') avec le premier bras (39) en direction sensiblement parallèle à la courroie (19, 19') et le second bras (41) qui en dépasse en s'écartant de celle-ci, la position de saisie d'article étant telle que le premier bras (39) est placé transversalement à la courroie (19) afin qu'il saisisse un article, le premier bras (39) et la longueur de la courroie (19, 19') formant un angle aigu, si bien qu'un article (21) transporté par la courroie (19, 19') est arrêté par le premier bras (39) et glisse sous l'action de la courroie (19, 19') le long du bras vers le second bras (41), l'article (21) pouvant alors être retiré de la courroie (19, 19') par rotation de la structure à bras (27, 27') de sa position de saisie d'article à sa position de repos, caractérisée en ce que:
l'angle aigu formé par le premier bras (39) et la longueur de la courroie (19, 19') est supérieur à 45°, et
le second bras (41) est sensiblement rectiligne.

2. Installation selon la revendication 1, caractérisée en ce qu'un poste de travail est placé au second emplacement (13...18), la structure (27) de balayage à bras transmettant un article (21) à traiter à partir de la courroie (19).

3. Installation selon la revendication 1, comprenant en outre une seconde courroie (37) qui est sensiblement perpendiculaire à la première courroie (19') au second emplacement (37), si bien que la structure de balayage (27') à bras peut retirer un article (21) d'une courroie (19) et le transmettre à la seconde courroie (19').

4. Installation selon l'une quelconque des revendications 1 à 3, dans laquelle l'angle aigu formé par la direction de déplacement de la courroie (19, 19') et le premier bras (39) de la structure de balayage (27, 27'), lorsqu'elle est dans sa position de saisie d'article, est pratiquement compris entre 55 et 65°.

5. Installation selon l'une quelconque des revendications 1 à 4, comprenant en outre un commutateur électrique (57) porté par le premier bras (39) et disposé de manière qu'il soit manoeuvré par un article (21) porté par la courroie (19, 19') et venant frapper le premier bras (39) lorsque la structure de balayage (27, 27') est dans sa position de saisie d'article.

6. Installation selon la revendication 5, comprenant en outre un dispositif (91) commandé par la manoeuvre du commutateur électrique (57) et destiné à provoquer la rotation du bras de sa position de saisie d'article à sa position de repos.

7. Installation selon la revendication 5, comprenant en outre un dispositif commandé par la manoeuvre du commutateur électrique (57) lorsque la structure de balayage (27, 27') est dans sa position de repos et destiné à empêcher la rotation de la structure de balayage (27, 27').

8. Installation selon l'une quelconque des revendications précédentes, caractérisée en ce qu'un dispositif destiné à déplacer un article transversalement sur la courroie mobile (19, 19') à un emplacement particulier sur sa longueur comporte:
un dispositif de renvoi (29) caractérisé en ce qu'il permet un glissement facile de l'article (27) vers la courroie mobile (19, 19') en direction sensiblement perpendiculaire à celle-ci afin que l'article (67) ait une position permettant son avance sur la courroie mobile (19, 19'),
un poussoir (69) destiné à faire avancer un article (67) du dispositif de renvoi (29) sur la courroie mobile (19, 19'), le poussoir (69) dépassant au-dessus d'une surface d'appui (61, 63) du dispositif de renvoi (29) et étant articulé de manière qu'il puisse tourner vers la courroie mobile (19, 19') lorsqu'un article (67) glisse sur lui mais normalement rappelé afin qu'il dépasse vers le haut, si bien qu'un article (67) peut glisser sur le dispositif de renvoi et peut prendre une position d'avance sur la courroie mobile (19, 19') sous la commande du poussoir (69), et
un dispositif (71) destiné à déplacer le poussoir (69) en translation par rapport à la courroie mobile (19, 19'), si bien qu'un article (67) peut être poussé du dispositif de renvoi (29) à la courroie mobile (19, 19') par le poussoir (69) le cas échéant et le poussoir (69) peut être ramené vers sa position normale de repos.

9. Installation selon la revendication 8, dans laquelle le dispositif de renvoi (29) comporte plusieurs rouleaux (61, 63) orientés de manière que leurs axes de rotation soient sensiblement parallèles à la direction de déplacement de la courroie mobile, si bien que l'article (67) peut glisser facilement en position sur le dispositif de renvoi (29).

10. Installation selon la revendication 9, dans laquelle les rouleaux (61, 63) sont disposés afin qu'ils laissent un trajet libre sensiblement perpendiculaire à la direction de déplacement de la courroie mobile (19, 19') et entre les extrémités des rouleaux (61, 63) adjacentes au trajet, le poussoir (69) étant monté afin qu'il se déplace dans ce trajet entre les rouleaux (61, 63).

11. Installation selon la revendication 10, dans laquelle le dispositif de déplacement (71) de poussoir comprend un vérin pneumatique sans tige.

12. Installation selon l'une quelconque des revendications 8 à 10, comprenant en outre un capteur (87) qui détecte la présence d'un article (67) sur le dispositif de renvoi (29), le capteur (87) étant raccordé de manière qu'il commande le dispositif (71) de déplacement de poussoir afin qu'il permettre le fonctionnment du poussoir (69) uniquement lorsqu'un article (67) est en position sur le dispositif de renvoi (29).

13. Installation selon l'une quelconque des revendications 8 à 12, dans laquelle un ressort (83) est disposé afin qu'il rappelle la lame formant poussoir (69) afin qu'elle dépasse vers le haut.

FIG._8.

FIG._1.

0 085 102

FIG.__2.

FIG.__3.

FIG._4.

FIG._5.

3

RETURN ACTIVATING
SOLENOID —73

ARM ACTIVATING —55
SOLENOID

RETURN POSITION SWITCH —85

ARM SWITCH —57

CONTROLLER                                    ~91

FIG.__7.

81

83

69

FIG.__6.